(19) Europäisches Patentamt
European Patent Office
Office européen des brevets

(11) **EP 3 095 153 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **14823992.4**

(22) Anmeldetag: **22.12.2014**

(51) Int Cl.:
*H01M 10/44* (2006.01)    *H02J 7/00* (2006.01)
*H01M 10/42* (2006.01)

(86) Internationale Anmeldenummer:
**PCT/EP2014/079047**

(87) Internationale Veröffentlichungsnummer:
**WO 2015/106936 (23.07.2015 Gazette 2015/29)**

(54) **VERFAHREN ZUM LADEZUSTANDSAUSGLEICH EINER BATTERIE**

METHOD FOR EQUALISING STATE OF CHARGE IN A BATTERY

PROCÉDÉ DE COMPENSATION D'ÉTAT DE CHARGE D'UNE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2014 DE 102014200619**

(43) Veröffentlichungstag der Anmeldung:
**23.11.2016 Patentblatt 2016/47**

(73) Patentinhaber: **Robert Bosch GmbH**
**70442 Stuttgart (DE)**

(72) Erfinder:
• **BECKER, Jens**
  **67071 Ludwigshafen Am Rhein (DE)**
• **BOEHM, Andre**
  **70806 Kornwestheim (DE)**
• **KORN, Christian**
  **70190 Stuttgart (DE)**

(56) Entgegenhaltungen:
**WO-A1-2010/140044    US-A1- 2013 257 323**

EP 3 095 153 B1

## Beschreibung

Stand der Technik

Die Erfindung betrifft ein Verfahren zum Ladezustandsausgleich einer Batterie, die mehrere Batterieeinheiten aufweist.

Es werden außerdem ein Computerprogramm und ein Batteriemanagementsystem angegeben, welche zur Durchführung des Verfahrens eingerichtet sind, sowie eine Batterie und ein Kraftfahrzeug, dessen Antriebssystem mit einer derartigen Batterie verbunden ist.

In Hybrid- und Elektrofahrzeugen werden Batteriepacks in Nickel-Metall-Hydrid-Technologie oder Lithium-Ionen-Technologie eingesetzt, die aus einer großen Anzahl in Serie geschalteter elektrochemischer Zellen bestehen. Ein Batteriemanagementsystem dient zur Überwachung der Batterie und soll neben der Sicherheitsüberwachung eine möglichst hohe Lebensdauer der Batterie gewährleisten.

Eine Aufgabe des Batteriemanagementsystems ist, Ladezustände (*State of Charge,* SOC) der einzelnen Batterieeinheiten trotz unterschiedlicher Selbstentladungen und unterschiedlicher Ladeeffizienzen aufeinander abzustimmen. Dies geschieht beispielsweise durch einen geeigneten Ladezustandsausgleich der Batterieeinheiten (*battery balancing*), die in der Regel resistiv vorgenommen wird. Ein derartiges resistives Ladezustandsausgleichsverfahren ist beispielsweise in der DE 10 2009 002 466 A1 beschrieben. In dieser Druckschrift wird alternativ auch ein induktives Ladezustandsausgleichsverfahren beschrieben.

DE 10 2008 002 100 A1 zeigt ein Verfahren zum Ladezustandsausgleich von Fahrzeugbatterien, wobei der Ladezustandswert der Zellen durch Spannungsmessung vorzugsweise in einer Ruhephase ermittelt wird. Als geeigneter Zeitpunkt wird beispielsweise unmittelbar nach der Aktion "Zündung ein" oder nach der Aktivierung eines Steuergeräts betrachtet, das die Messung durchführt. Aus den Ladezuständen der einzelnen Zellen wird in einem weiteren Schritt eine Ladungsmenge berechnet, um die jede Zelle entladen werden muss, bis der Ladezustand demjenigen der schwächsten Zelle entspricht.

DE 10 2010 043 912 A1 zeigt ein Verfahren zur Bestimmung des Ladezustands von Zellen einer Batterie, wobei abwechselnd aufeinanderfolgend ein Algorithmus zum Zellenausgleich und eine Batteriezustandserkennung ausgeführt werden. Die abwechselnde Ausführung des Algorithmus zum Zellausgleich und der Batteriezustandserkennung wird in Abhängigkeit eines vorgebbaren Ladezustands beendet.

Neben unterschiedlichen Selbstentladungsraten der einzelnen Batteriezellen weichen auch die Kapazitäten der Batteriezellen durch Produktionsstreuungen voneinander ab. Dieser Effekt ist zu Beginn der Lebenszeit vernachlässigbar gering, kann sich aber im Laufe der Lebensdauer durch Unterschiede bei der Zellalterung vergrößern und zu mehreren Prozent Kapazitätsunterschied führen.

Offenbarung der Erfindung

Vorteile der Erfindung

Bei einem erfindungsgemäßen Verfahren zum Ladezustandsausgleich einer Batterie, die mehrere Batterieeinheiten aufweist, ist vorgesehen, dass

a) ein Ladezustandswert zumindest einer Batterieeinheit nach einer Ruhephase der Batterie ermittelt wird,

b) ein Entscheidungswert, ob ein voriger Ladezustandswert der zumindest einen Batterieeinheit aktualisiert werden kann, ermittelt wird, wobei der Entscheidungswert zumindest von einem Verhältnis des ermittelten Ladezustandswert der zumindest einen Batterieeinheit gegenüber dem vorigen Ladezustandswert der zumindest einen Batterieeinheit und von der Dauer der Ruhephase abhängt,

c) der vorige Ladezustandswert der zumindest einen Batterieeinheit aktualisiert wird um einen aktuellen Ladezustandswert der zumindest einen Batterieeinheit zu erhalten, falls der Entscheidungswert, ob der vorige Ladezustandswert der zumindest einen Batterieeinheit aktualisiert werden kann, einen Schwellenwert überschreitet,

d) ein Ladezustandsausgleichsbedarfswert anhand des aktuellen Ladezustandswerts ermittelt wird und

e) die zumindest eine Batterieeinheit auf Basis des ermittelten Ladezustandsausgleichsbedarfswerts entladen wird,

wobei der Entscheidungswert den Schwellenwert überschreitet, falls der ermittelte Ladezustandswert größer ist als ein bestimmter Prozentsatz des vorigen Ladezustandswerts wobei der bestimmte Prozentsatz des vorherigen Ladezustandswerts eine feste Zahl größer oder gleich 100% ist. Der Entscheidungswert hängt von dem Verhältnis des ermittelten Ladezustandswerts gegenüber dem vorigen Ladezustandswert ab. Der Ladezustandswert wird also nicht periodisch, sondern bedingt aktualisiert. Der Ladezustandsausgleich kann dagegen durchaus periodisch durchgeführt werden. Alternativ hierzu oder zustätzlich hierzu kann der Ladezustandsausgleich von Ereignissen wie einem Zustand "Ende Laden" getriggert werden. Eine Vielzahl von Methoden werden dem Fachmann geläufig sein. Der Ladezustandsausgleich wird anhand der vorigen Ladezustandswerte durchgeführt, wenn zwar eine Messung erfolgte, die Aktualisierung aber nicht erfolgte, und anhand der ermittelten Ladezustandswerte durchgeführt, wenn die Aktualisierung erfolgte.

Ein weiterer Vorteil ist, dass das Verfahren unabhängig vom Fahrerprofil abläuft, das heißt von dem Leistungsprofil, dem die Batterie ausgesetzt ist.

Vorteilhafte Weiterbildungen und Verbesserungen des im unabhängigen Anspruch 1 angegebenen Verfahrens sind durch die in den abhängigen Ansprüchen aufgeführten Maßnahmen möglich.

Besonders vorteilhaft ist ein bestimmter Prozentsatz des vorigen Ladezustandswerts zwischen 100 % und 200 %. Die Ladezustandswerte der letzten Messung werden also nur dann überschrieben, wenn der neue Ladezustandswert höher ist als der letztgemessene. Hierdurch wird für den Ladezustandsausgleich immer der höchste Ladezustandswert seit dem letzten Ladezustandsausgleich verwendet. Durch dieses Verfahren wird der Ladezustandsausgleich wird nicht bei beliebigen Ladezustandswerten der Batterieeinheit vorgenommen, sondern nur bei tendenziell hohen Ladezustandswerten. Mit den Maßnahmen der Erfindung wird daher keine Ladung unnötig ausgeglichen. Dies hat insbesondere den Vorteil, dass die Bauelemente der Ladezustandsausgleichselektronik sich nicht unnötig erwärmen und schneller altern. Der Temperaturhub beim Ladezustandsausgleich kann typischerweise ca. 40 K betragen. Zudem wird eine schnelle Alterung der Lötverbindungen vermieden, welche durch den vom Ladezustandsausgleich verursachten Temperaturwechsel hervorgerufen wird.

Besonders vorteilhaft wird das Verfahren daher in Systemen eingesetzt, in welchen die Kapazität der einzelnen Batterieeinheiten nicht bekannt ist und ein Ladezustandsausgleich nach Art eines resistiven Batterieladezustandsausgleichs erfolgt.

Nach einer bevorzugten Ausführungsform hängt der Entscheidungswert von einem vorigen Ladezustandswert der zumindest einen Batterieeinheit, von dem ermittelten Ladezustandswert der zumindest einen Batterieeinheit und zusätzlich von einem Ermittlungszeitpunkt des ermittelten Ladezustandswerts ab. Der Ladezustandswert wird in Schritt a) nach einer Ruhephase der Batterie ermittelt. Die Abhängigkeit des Entscheidungswerts von dem Ermittlungszeitpunkt gestaltet sich dabei bevorzugt als eine Abhängigkeit von einer Dauer der Ruhephase. Hierdurch kann erreicht werden, dass bei einer kurzen Ruhephase nicht eine ältere, genauere Messung durch eine schlechtere überschrieben wird, wenn die Änderung des Ladezustandswerts kaum nennenswert ist. Die Ruhephase wird weiterhin bevorzugt durch einen Übergang der Batterie in einen operativen Betriebszustand, beispielsweise in einen Fahrbetrieb, in einen Aufladebetrieb oder durch einen Ladezustandsausgleich beendet.

Nach einer bevorzugten Ausführungsform wird nach dem Entladen in Schritt e) der aktuelle Ladezustandswert der Batterieeinheiten zurückgesetzt. Um wieder einen gültigen Wert für den Ladezustandswert der Batterieeinheiten zu haben, kann unmittelbar nach dem Ladezustandsausgleich eine neue initiale Messung des Ladezustandswertes der zumindest einen Batterieeinheit erfolgen. Besonders vorteilhaft ist, dass zu jedem Leistungszyklus der Batterie somit auch ein höchster Ladezustandswert der Batterie ermittelt werden kann.

Zur Berechnung des Ladezustandswerts (SOC, *state of charge*) der Batterieeinheit wird im Allgemeinen ein Modell der Batterieeinheit zugrunde gelegt. Beispielsweise wird der Ladezustandswert dabei anhand eines Ladestroms und einer offenen Klemmenspannung (OCV, *open circuit voltage)* der Batterie ermittelt.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich insbesondere um ein Modul zur Implementierung eines Batterieladezustandsausgleichsystems oder um ein Modul zur Implementierung eines Batteriemanagementsystems eines Fahrzeugs handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung, beispielsweise auf einem tragbaren Speicher, wie einer CD-ROM, DVD, einem USB-Stick oder einer Speicherkarte. Zusätzlich oder alternativ dazu kann das Computerprogramm auf einer Computereinrichtung, wie etwa auf einem Server oder einem Cloud-Server, zum Herunterladen bereitgestellt werden, beispielweise über ein Datennetzwerk, wie das Internet, oder eine Kommunikationsverbindung, wie etwa eine Telefonleitung oder eine drahtlose Verbindung.

Nach einem weiteren Aspekt umfasst ein Batteriemanagementsystem einer Batterie, die mehrere Batterieeinheiten aufweist,

eine Einheit zur Ermittlung eines Ladezustandswerts zumindest einer Batterieeinheit, nach einer Ruhephase der Batterie eine Einheit zur Ermittlung eines Entscheidungswerts, ein voriger Ladezustandswert der zumindest einen Batterieeinheit aktualisiert werden kann, wobei der Entscheidungswert zumindest von einem Verhältnis des ermittelten Ladezustandswert der zumindest einen Batterieeinheit gegenüber dem vorigen Ladezustandswert der zumindest einen Batterieeinheit und von einer Dauer der Ruhephase abhängt, eine Einheit zum Aktualisieren des vorigen Ladezustandswertes der zumindest einen Batterieeinheit um einen aktuellen Ladezustandswert der zumindest einen Batterieeinheit zu erhalten, falls der Entscheidungswert einen Schwellenwert überschreitet, eine Einheit zur Ermittlung eines Ladezustandsausgleichsbedarfswerts anhand des aktuellen Ladezustandswerts und eine Einheit zum Steuern des Endladens der zumindest einen Batterieeinheit auf Basis des ermittelten Ladezustandsausgleichsbedarfswerts,

wobei der Entscheidungswert den Schwellenwert überschreitet, falls der ermittelte Ladezustandswert größer ist als ein bestimmter Prozentsatz des vorigen Ladezustandswerts, wobei der bestimmte Prozentsatz des vorherigen Ladezustandswerts eine feste Zahl größer oder gleich 100 % ist. Erfindungsgemäß wird außerdem eine Batterie, insbesondere eine Lithium-Ionen-Batterie oder eine Nickel-Metallhydrid-Batterie, zur Verfügung gestellt, die ein Batteriemanagementsystem umfasst und bevorzugt mit einem Antriebssystem eines Kraftfahrzeugs verbindbar ist, wobei das Batteriemanagementsystem wie zuvor beschrieben ausgebildet ist und/oder eingerichtet ist, das erfindungsgemäße Verfahren auszuführen.

Die Begriffe "Batterie" und "Batterieeinheit" werden in der vorliegenden Beschreibung dem üblichen Sprachgebrauch angepasst für Akkumulator beziehungsweise Akkumulatoreinheit verwendet. Die Batterie umfasst bevorzugt eine oder mehrere Batterieeinheiten, die eine Batteriezelle, ein Batteriemodul, einen Modulstrang oder einen Batteriepack bezeichnen können. Als Batteriepack werden dabei mehrere Zellen bezeichnet, die räumlich zusammengefasst sind und oft mit einem Gehäuse oder mit einer Ummantelung versehen sind. Die Batteriezellen sind dabei vorzugsweise untereinander fest verbunden und schaltungstechnisch miteinander verbunden, beispielsweise seriell oder parallel zu Modulen verschaltet. Mehrere Module können zu sogenannten Batteriedirektkonvertern (BDC, *battery direct converter*) verschaltet sein, und mehrere Batteriedirektkonverter zu einem sogenannten Batteriedirektinverter (BDI, *battery direct inverter)*.

Erfindungsgemäß wird außerdem ein Kraftfahrzeug mit einer derartigen Batterie zur Verfügung gestellt, wobei die Batterie mit einem Antriebssystem des Kraftfahrzeugs verbunden ist. Bevorzugt wird das Verfahren bei elektrisch angetriebenen Fahrzeugen angewendet, bei welchen eine Zusammenschaltung einer Vielzahl von Batteriezellen zur Bereitstellung der nötigen Antriebsspannung des Fahrzeugs erfolgt.

Kurze Beschreibung der Zeichnungen

Ausführungsbeispiele der Erfindung sind in den Zeichnungen dargestellt und in der nachfolgenden Beschreibung näher erläutert. Es zeigen

Figur 1     eine schematische Darstellung zweier Batterieeinheiten unterschiedlicher Kapazität beim Durchlaufen eines Ladezustandsausgleichsverfahrens nach dem Stand der Technik,

Figur 2     eine schematische Darstellung von Ladezuständen über die Zeit bei zwei beispielhaften Fahrzyklen und

Figur 3     eine schematische Darstellung eines Batteriemanagementsystems.

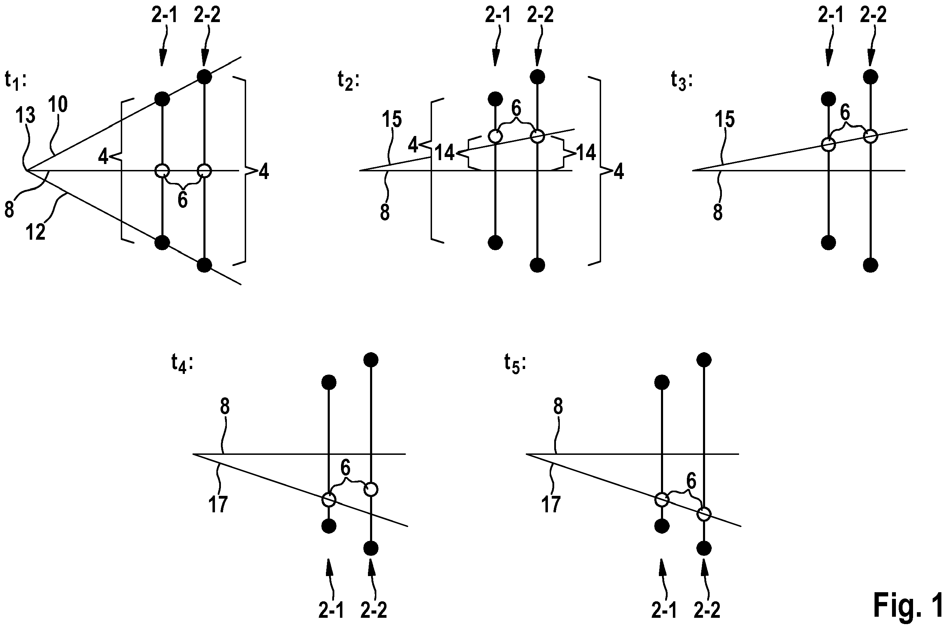

Figur 1 zeigt zwei Batterieeinheiten 2-1, 2-2, welche unterschiedliche Kapazitäten 4 aufweisen. Die Batterieeinheiten 2-1, 2-2 sind zu fünf verschiedenen Zeitpunkten $t_1$, $t_2$, ..., $t_5$ dargestellt, zu welchen sie im Allgemeinen verschiedene Ladezustandswerte 6 aufweisen. Um den Hintergrund der erfindungsgemäßen Verfahrensschritte darzustellen, ist in Figur 1 eine schematische Darstellung der Batterieeinheiten 2-1, 2-2 unterschiedlicher Kapazität 4 beim Durchlaufen eines Ladezustandsausgleichsverfahrens nach dem Stand der Technik dargestellt. Die Batterieeinheiten 2-1, 2-2 sind dabei entlang mehrerer Modellhilfslinien 8, 10, 12, 15, 17 aufgereiht, welche strahlenförmig von einem Bezugspunkt 13 ausgehen. Die Batterieeinheiten 2-1, 2-2 weisen dabei verschiedene Ladezustandswerte 6 auf.

Zum ersten Zeitpunkt $t_1$ geht eine erste Modellhilfslinie 8 durch Ladezustandswerte 6 in Höhe von 50 % der Kapazität 4, eine zweite Modellhilfslinie 10 durch den Ladezustandswert in Höhe von 100 % der Kapazität 4 und eine dritte Modellhilfslinie 12 durch den Ladezustandswert 6 in Höhe von 0 % der Kapazität 4.

Zum ersten Zeitpunkt $t_1$ haben beide Batterieeinheiten 2-1, 2-2 einen Ladezustandswert 6 in Höhe von 50 %. Zwischen dem ersten Zeitpunkt $t_1$ und dem zweiten Zeitpunkt $t_2$ erfolgt eine Ladung beider Batterieeinheiten 2-1, 2-2 um einen Aufladungsbetrag 14. Da die Batterieeinheiten 2-1, 2-2 unterschiedliche Kapazitäten 4 aufweisen, weisen sie zum zweiten Zeitpunkt $t_2$ einen unterschiedlichen Ladezustandswert 6 auf. Dies wird anhand einer vierten Modellhilfslinie 15 deutlich, welche identische Ladezustände 6 der verschiedenen Batterieeinheiten 2-1, 2-2 angibt.

Zwischen dem zweiten Zeitpunkt $t_2$ und dem dritten Zeitpunkt $t_3$ erfolgt ein Ladezustandsausgleich. Hierzu wurde die erste Batterieeinheit 2-1 resistiv teilentladen, bis beide Ladezustandswerte 6 der Batterieeinheiten 2-1, 2-2 auf der vierten Modellhilfslinie 15 liegen, welche identische Ladezustandswerte 6 der verschiedenen Batterieeinheiten 2-1, 2-2 angibt.

Zwischen dem dritten Zeitpunkt $t_3$ und dem vierten Zeitpunkt $t_4$ erfolgt ein operativer Betrieb der Batterie, welcher effektiv eine Entladung bedeutet. Beide Batterieeinheiten 2-1, 2-2 werden um einen gleichen Entladebetrag entladen (nicht dargestellt). Da die beiden Batterieeinheiten 2-1, 2-2 verschiedene Kapazitäten 4 aufweisen, ist ihr Ladezustandswert 6 relativ gesehen nicht gleich, wie durch eine fünfte Modellhilfslinie 17 angedeutet wird, welche identische Ladezustandswerte 6 der verschiedenen Batterieeinheiten 2-1, 2-2 angibt.

Zwischen dem vierten Zeitpunkt $t_4$ und dem fünften Zeitpunkt $t_5$ erfolgt wiederum ein Ladezustandsausgleich. In diesem Fall wird die zweite Batterieeinheit 2-2 teilweise entladen, um einen einheitlichen Ladezustandswert 6 zu erreichen, was zum fünften Zeitpunkt $t_5$ dargestellt ist.

Anhand Figur 1 ist ersichtlich, dass der Ausgleichsbedarf beim zweiten Ladezustandsausgleich zum Zeitpunkt $t_5$ teilweise durch den Ausgleichsbedarf beim ersten Ladezustandsausgleich zum Zeitpunkt $t_3$ geschaffen worden ist. In Systemen, in denen die Kapazität 4 der einzelnen Batterieeinheiten 2-1, 2-2 nicht bekannt ist und der resistive Ladezustandsausgleich hin zu einem gemeinsamen Ladezustandswert 6 vorgenommen wird, ist die gesamte auszugleichende Ladung sehr hoch, da unnötigerweise Ladung über die Ladezustandsausgleichswiderstände abgeführt wird, die weit über dem reinen Ausgleich der verschiedenen Selbstentladungen liegt. Wird die Batterie ständig so ausgeglichen, dass sämtliche Batterieeinheiten 2-1, 2-2 einen gleichen Ladezustandswert 6 aufweisen, so wird nicht nur unnötig Ladung über die Balance-Widerstände abgeführt. Gleichzeitig kommt es auch zu unnötig vielen Schaltvorgängen der Ladezustandsausgleichseinheit, die zu einer deutlichen Lebensdauerreduzierung der Elektronik führen.

Im Gegensatz hierzu werden erfindungsgemäß die Ladezustandswerte 6 der letzten Messung nur dann überschrieben, wenn der neue Ladezustandswert 6 höher ist als der letztgemessene. Hierdurch wird für den Ladezustandsausgleich immer der höchste Ladezustandswert 6 seit dem letzten Ladezustandsausgleich verwendet. Der Ladezustandsausgleich wird also nicht bei beliebigen Ladezustandswerten 6 des Batteriepacks vorgenommen, sondern nur tendenziell hohen Ladezuständen, wodurch der Scheinbedarfsladezustandsausgleich reduziert wird. Nach einem Ladezustandsausgleich soll die vorige Ladezustandswertmessung ungültig sein. Um einen gültigen Wert zu haben, wird unmittelbar nach dem Ladezustandsausgleich eine neue initiale Messung durchgeführt.

Das Verfahren umfasst daher nach einer bevorzugten Ausführungsform die Schritte:

1. Bedingte Ladezustandsmessung jeder Batterieeinheit $SOC_i$ und $SOC_{MIN} = \min(SOC_i)_i$
2. Basierend auf der SOC-Messung Ermittlung des Ladezustandsausgleichbedarfswerts. Die auszugleichende Ladung für die Batterieeinheit i:

$$Q_i = C_{nom}*(SOC_i-SOC_{MIN}),$$

mit $C_{nom}$ der Normalkapazität der Batterieeinheiten 2-1, 2-2.
3. Einschalten der Ladezustandsausgleichseinheit für eine Dauer der zu entladenden Ladung $Q_i$.

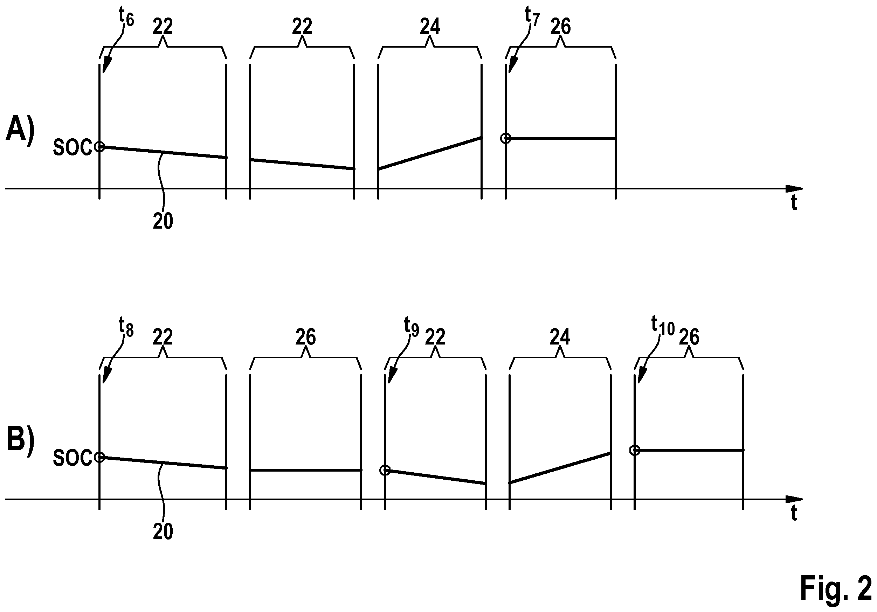

Figur 2 zeigt beispielhafte Verläufe 20 eines Ladezustands SOC einer Batterie im Betrieb. Im ersten Beispiel A) sind zunächst zwei operative Betriebsphasen 22 der Batterie vorgesehen, innerhalb welcher der Ladezustand der Batterie sinkt. An die operativen Betriebsphasen schließt eine Aufladephase 24 und hieran eine Ladezustandsausgleichsphase 26 an. In dem zweiten Beispiel B) erfolgen eine erste operative Betriebsphase 22, eine Ladezustandsausgleichsphase 26 eine zweite operative Betriebsphase 22, eine Aufladephase 24 und eine zweite Ladezustandsausgleichsphase 26.

Beim vorgestellten Verfahren ist vorgesehen, den Ladezustandswert 6 vor Ende einer Ruhephase zu ermitteln. Die Ruhephase zeichnet sich dadurch aus, dass außer den Selbstentladungsströmen kein Strom durch die Batterieeinheiten 2-1, 2-2 fließt. Ladephasen und Fahrphasen gehören somit nicht zu Ruhephasen sondern zu Betriebsphasen der Batterie. Hierdurch wird vorteilhaft ausgenutzt, dass die Ladezustandsmessungenauigkeit umso geringer ist, je länger die Batterieeinheit in Ruhe ist.

Die Zeitpunkte $t_6$ bis $t_{10}$ stellen beispielhaft Zeitpunkte dar, bei welchen die Ladezustandswerte 6 der Batterieeinheiten 2-1, 2-2 ermittelt werden. Ein sechster Zeitpunkt $t_6$ ist der Beginn der ersten operativen Betriebsphase 22. Ein siebter Zeitpunkt $t_7$ ist der Beginn der Ladezustandsausgleichsphase 26. Gleichzeitig ist der siebte Zeitpunkt $t_7$ das Ende der Aufladephase 24. Zu einem achten Zeitpunkt $t_8$ beginnt die erste operative Betriebsphase 22. Zu einem neunten Zeitpunkt $t_9$ beginnt die zweite operative Betriebsphase 22 bzw. endet die erste Ladezustandsausgleichsphase 26. Zu einem zehnten Zeitpunkt $t_{10}$ beginnt die zweite Ladezustandsausgleichsphase 26 bzw. endet die Aufladephase 24.

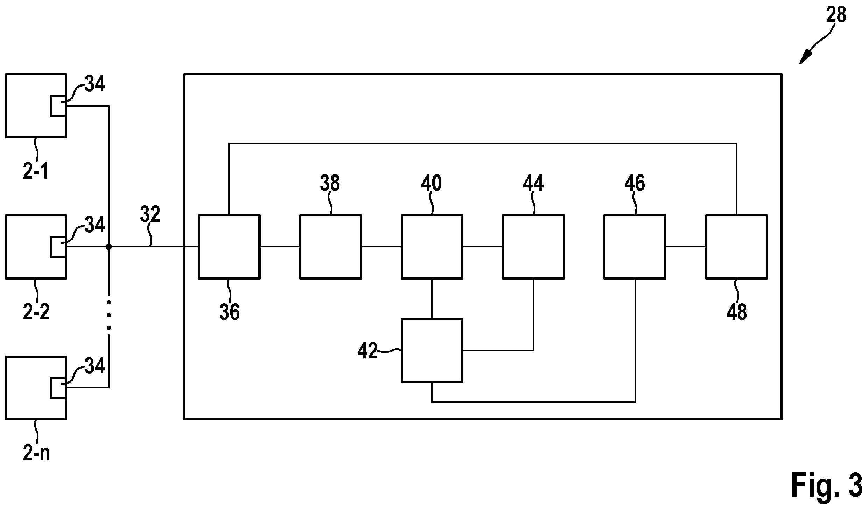

Figur 3 zeigt eine beispielhafte Darstellung des erfindungsgemäßen Batteriemanagementsystems 28, welches eingerichtet ist, eine Anzahl von Batterieeinheiten 2-1, 2-2, ... 2-n zu überwachen und zu steuern. Die Kommunikation zwischen den Batterieeinheiten 2-1, 2-2, ... 2-n und dem Batteriemanagementsystem 28 erfolgt über geeignete Kommunikationseinheiten 34, 36 als Schnittstellen zu seinem Kommunikationskanal 32, beispielsweise zu einem CAN-Bus. Das Batteriemanagementsystem 28 kann alternativ auch per Messleitung direkt an die Batterieeinheiten 2-1, 2-2, ... 2-n angeschlossen sein, so dass keine Kommunikation über einen Bus notwendig ist.

Das Batteriemanagementsystem 28 weist eine Einheit 38 zur Ermittlung des Ladezustandswerts 6 zumindest einer Batterieeinheit 2-1, 2-2, ... 2-n auf. Die Einheit 38 zur Ermittlung des Ladezustandswerts 6 ermittelt den Ladezustandswert 6 der Batterieeinheiten 2-1, 2-2, ... 2-n beispielsweise periodisch oder indem es durch einen Befehl dazu veranlasst wird.

Das Batteriemanagementsystem 28 weist eine Einheit 40 zur Ermittlung eines Entscheidungswerts auf. Die Einheit 40 zur Ermittlung des Entscheidungswerts empfängt Daten der Einheit 38 zur Ermittlung des Ladezustandswerts 6 der Batterieeinheiten 2-1, 2-2, ... 2-n und Daten einer Einheit 42 zur Ermittlung eines aktuellen Ladezustandswerts 6 der Batterieeinheiten 2-1, 2-2, ... 2-n. Durch Vergleich des ermittelten Ladezustandswerts 6 und des aktuellen Ladezustandswerts 6 sowie unter Berücksichtigung des Ermittlungszeitpunkts $t_6$, ..., $t_{10}$ bzw. der Differenz der Ermittlungszeitpunkte $t_6$, ..., $t_{10}$ des vorigen Ladezustandswerts 6 und des ermittelten Ladezustandswerts 6 berechnet die Einheit 40, ob der aktuelle Ladezustandswert 6 aktualisiert werden kann. Ist dies der Fall, so ruft die Einheit 40 zur Ermittlung des Entscheidungswerts eine Einheit 44 zur Aktualisierung des vorigen Ladezustandswerts 6 auf, welche den vorigen Ladezustandswert 6 aktualisiert.

Das Batteriemanagementsystem 28 weist eine weitere Einheit 46 zur Ermittlung eines Ladezustandsausgleichsbedarfswerts auf, welche anhand des aktuellen Ladezustandswerts 6 die Ladezustandsausgleichsbedarfswerte für die einzelnen Batterieeinheiten 2-1, 2-2, ... 2-n ermittelt. Wenn die Einheit 46 zur Ermittlung des Ladezustandsausgleichsbedarfswerts einen Befehl zum Ladezustandsausgleich erhält, ermittelt sie den Ladezustandsausgleichsbedarfswert durch Abfrage bei der Einheit 42 zur Ermittlung des aktuellen Ladezustandswerts 6.

Die Einheit 46 zur Ermittlung der Ladezustandsausgleichsbedarfswerte ist im vorliegenden Beispiel außerdem mit der Einheit 44 zum Aktualisieren des vorigen Ladezustandswerts 6 gekoppelt, beispielsweise um Zeitpunkte der Aktualisierung des Ladezustandswerts 6 zu berücksichtigen.

Das Batteriemanagementsystem 28 weist außerdem eine Einheit 48 zum Steuern des Entladens der Batterieeinheiten 2-1, 2-2, ... 2-n auf Basis der ermittelten Ladezustandsausgleichsbedarfswerte auf. Die Einheit 48 zum Steuern des Entladens der Batterieeinheiten 2-1, 2-2, ... 2-n empfängt die Daten der Einheit 46 zur Ermittlung des Ladezustandsausgleichsbedarfswerts. Die Einheit 48 zum Steuern des Entladens ist an die Kommunikationseinheit 36 angeschlossen, welche mit den Batterieeinheiten 2-1, 2-2, ... 2-n kommuniziert.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Ladezustandsausgleich einer Batterie, die mehrere Batterieeinheiten (2-1, 2-2, ... 2-n) aufweist, mit den Schritten:

   a) Ermitteln eines Ladezustandswerts (6) zumindest einer Batterieeinheit (2-1, 2-2, ... 2-n) nach einer Ruhephase der Batterie,
   b) Ermitteln eines Entscheidungswerts, ob ein voriger Ladezustandswert (6) der zumindest einen Batterieeinheit (2-1, 2-2, ... 2-n) aktualisiert werden kann, wobei der Entscheidungswert zumindest von einem Verhältnis des ermittelten Ladezustandswert (6) der zumindest einen Batterieeinheit (2-1, 2-2, ... 2-n) gegenüber dem vorigen Ladezustandswert (6) der zumindest einen Batterieeinheit (2-1, 2-2, ... 2-n)
   und von einer Dauer der Ruhephase abhängt,
   c) Aktualisieren des vorigen Ladezustandswerts (6) der zumindest einen Batterieeinheit (2-1, 2-2, ... 2-n) um einen aktuellen Ladezustandswert (6) der zumindest einen Batterieeinheit (2-1, 2-2, ... 2-n) zu erhalten, falls der Entscheidungswert, ob der vorige Ladezustandswert (6) der zumindest einen Batterieeinheit (2-1, 2-2, ... 2-n) aktualisiert werden kann, einen Schwellenwert überschreitet,
   d) Ermitteln eines Ladezustandsausgleichsbedarfswerts anhand des aktuellen Ladezustandswerts (6) und
   e) Entladen der zumindest einen Batterieeinheit (2-1, 2-2, ... 2-n) auf Basis des ermittelten Ladezustandsausgleichsbedarfswerts,

**dadurch gekennzeichnet, dass** der Entscheidungswert den Schwellenwert überschreitet, falls der ermittelte Ladezustandswert (6) größer ist als ein bestimmter Prozentsatz des vorigen Ladezustandswerts (6), wobei der bestimmte Prozentsatz des vorigen Ladezustandswerts (6) eine feste Zahl größer oder gleich 100 % ist.

2. Verfahren nach Anspruch 1, **dadurch gekennzeichnet, dass** nach dem Entladen in Schritt e) der aktuelle Ladezustandswert (6) der Batterieeinheiten (2-1, 2-2, ... 2-n) zurückgesetzt wird.

3. Computerprogramm zur Durchführung eines der Verfahren nach einem der Ansprüche 1 bis 2, wenn das Computerprogramm auf einer programmierbaren Computereinrichtung ausgeführt wird.

4. Batteriemanagementsystem (28) einer Batterie, die mehrere Batterieeinheiten (2-1, 2-2, ... 2-n) aufweist mit

   a) einer Einheit (38) zur Ermittlung eines Ladezustandswerts (6) zumindest einer Batterieeinheit (2-1, 2-2, ... 2-n) nach einer Ruhephase der Batterie,
   b) einer Einheit (40) zur Ermittlung eines Entscheidungswerts, ob ein voriger Ladezustandswert (6) der zumindest einen Batterieeinheit (2-1, 2-2, ... 2-n) aktualisiert werden kann, wobei der Entscheidungswert zumindest von einem Verhältnis des ermittelten Ladezustandswert (6) der zumindest einen Batterieeinheit (2-1, 2-2, ... 2-n) gegenüber dem vorigen Ladezustandswert (6) der zumindest einen Batterieeinheit (2-1, 2-2, ... 2-n)
   und von einer Dauer der Ruhephase abhängt,
   c) einer Einheit (44) zur Aktualisierung des vorigen Ladezustandswerts (6) der zumindest einen Batterieeinheit (2-1, 2-2, ... 2-n) um einen aktuellen Ladezustandswert (6) der zumindest einen Batterieeinheit (2-1, 2-2, ... 2-n) zu erhalten, falls der Entscheidungswert einen Schwellenwert überschreitet,

d) einer Einheit (46) zur Ermittlung eines Ladezustandsausgleichsbedarfswerts anhand des aktuellen Ladezustandswerts (6) und

e) einer Einheit (48) zum Steuern des Entladens der zumindest einen Batterieeinheit (2-1, 2-2, ... 2-n) auf Basis des ermittelten Ladezustandsausgleichsbedarfswerts,

wobei der Entscheidungswert den Schwellenwert überschreitet, falls der ermittelte Ladezustandswert (6) größer ist als ein bestimmter Prozentsatz des vorigen Ladezustandswerts (6), wobei der bestimmte Prozentsatz des vorigen Ladezustandswerts eine feste Zahl größer oder gleich 100 % ist.

**5.** Batterie, die mehrere Batterieeinheiten (2-1, 2-2, ... 2-n) und ein Batteriemanagementsystem (28) nach Anspruch 4 umfasst.

**6.** Kraftfahrzeug mit einer Batterie nach Anspruch 5, wobei die Batterie mit einem Antriebssystem des Kraftfahrzeugs verbunden ist.

**Claims**

**1.** Method for equalizing state of charge in a battery that has a plurality of battery units (2-1, 2-2, ... 2-n), with the following steps:

a) A state of charge value (6) is ascertained for at least one battery unit (2-1, 2-2, ... 2-n) following a resting phase of the battery,

b) A decision value as to whether a prior state of charge value (6) of the at least one battery unit (2-1, 2-2, ... 2-n) can be updated is ascertained, wherein the decision value is at least dependent upon a ratio of the state of charge value (6) ascertained for the at least one battery unit (2-1, 2-2, ... 2-n) with respect to the prior state of charge value (6) of the at least one battery unit (2-1, 2-2, ... 2-n) and upon a duration of the resting phase,

c) The prior state of charge value (6) of the at least one battery unit (2-1, 2-2, ... 2-n) is updated in order to obtain a present state of charge value (6) of the at least one battery unit (2-1, 2-2, ... 2-n), if the decision value as to whether the prior state of charge value (6) of the at least one battery unit (2-1, 2-2, ... 2-n) can be updated exceeds a threshold value,

d) A state of charge equalization requirement value is ascertained on the basis of the present state of charge value (6) and,

e) The at least one battery unit (2-1, 2-2, ... 2-n) is discharged on the basis of the state of charge equalization requirement value ascertained,

**characterized in that** the decision value exceeds the threshold value, if the state of charge value (6) ascertained is greater than a specific percentage of the prior state of charge value (6), wherein the specific percentage of the prior state of charge value (6) is a fixed number equal to or greater than 100%.

**2.** Method according to Claim 1, **characterized in that**, after discharging in step e), the current state of charge value (6) of the battery units (2-1, 2-2, ... 2-n) is reset.

**3.** Computer program for the execution of one of the methods according to one of Claims 1 to 2, where the computer program is run on a programmable computing device.

**4.** Battery management system (28) of a battery comprising a plurality of battery units (2-1, 2-2, ... 2-n), having

a) a unit 38 for ascertaining a state of charge value (6) of at least one battery unit (2-1, 2-2, ... 2-n) following a resting phase of the battery,

b) a unit (40) for ascertaining a decision value as to whether a prior state of charge value (6) of the at least one battery unit (2-1, 2-2, ... 2-n) can be updated, wherein the decision value is at least dependent upon a ratio of the state of charge value (6) ascertained for the at least one battery unit (2-1, 2-2, ... 2-n) with respect to the prior state of charge value (6) of the at least one battery unit (2-1, 2-2, ... 2-n) and upon a duration of the resting phase,

c) a unit (44) for updating the prior state of charge value (6) of the at least one battery unit (2-1, 2-2, ... 2-n) in order to obtain a present state of charge value (6) of the at least one battery unit (2-1, 2-2, ... 2-n), if the decision value exceeds a threshold value,

d) a unit (46) for ascertaining a state of charge equalization requirement value on the basis of the present state of charge value (6) and,

e) a unit (48) for controlling the discharge of the at least one battery unit (2-1, 2-2, ... 2-n) on the basis of the state of charge equalization requirement value ascertained,

wherein the decision value exceeds the threshold value, if the state of charge value (6) ascertained is greater than a specific percentage of the prior state of charge value (6), wherein the specific percentage of the prior state of charge value is a fixed number equal to or greater than 100%.

**5.** Battery comprising a plurality of battery units (2-1, 2-2, ... 2-n) and a battery management system (28) according to Claim 4.

6. Motor vehicle with a battery according to Claim 5, wherein the battery is connected to a drive system of the motor vehicle.

**Revendications**

1. Procédé de compensation d'état de charge d'une batterie qui comporte une pluralité d'unités de batterie (2-1, 2-2, ..., 2-n), comprenant les étapes consistant à :

   a) déterminer une valeur d'état de charge d'au moins une unité de batterie (2-1, 2-2, ..., 2-n) après une phase de repos de la batterie,
   b) déterminer une valeur de décision permettant de savoir si une valeur d'état de charge (6) antérieure de ladite au moins une unité de batterie (2-1, 2-2, ..., 2-n) peut être actualisée, dans lequel la valeur de décision dépend d'au moins un rapport de la valeur d'état de charge (6) déterminée de ladite au moins une unité de batterie (2-1, 2-2, ..., 2-n) par rapport à la valeur d'état de charge (6) antérieure de ladite au moins une unité de batterie (2-1, 2-2, ..., 2-n) et d'une durée de la phase de repos,
   c) actualiser la valeur d'état de charge (6) antérieure de ladite au moins une unité de batterie (2-1, 2-2, ..., 2-n) afin d'obtenir une valeur d'état de charge (6) actuelle de ladite au moins une unité de batterie (2-1, 2-2, ..., 2-n) dans le cas où la valeur de décision permettant de savoir si la valeur d'état de charge (6) antérieure de ladite au moins une unité de batterie (2-1, 2-2, ..., 2-n) peut être actualisée, dépasse une valeur de seuil,
   d) déterminer une valeur de demande de compensation d'état de charge sur la base de la valeur d'état de charge (6) actuelle, et
   e) décharger ladite au moins une unité de batterie (2-1, 2-2, ..., 2-n) sur la base de la valeur de demande de compensation d'état de charge déterminée,

   **caractérisé en ce que** la valeur de décision dépasse la valeur de seuil dans le cas où la valeur d'état de charge (6) déterminée est supérieure à un pourcentage déterminé de la valeur d'état de charge (6) antérieure, dans lequel le pourcentage déterminé de la valeur d'état de charge (6) antérieure est un nombre fixe supérieur ou égal à 100 %.

2. Procédé selon la revendication 1, **caractérisé en ce qu'**après la décharge effectuée à l'étape e), la valeur d'état de charge (6) actuelle de l'unité de batterie (2-1, 2-2, ..., 2-n) est réinitialisée.

3. Programme d'ordinateur destiné à mettre en oeuvre un procédé selon l'une quelconque des revendications 1 et 2, lorsque le programme d'ordinateur est exécuté sur un dispositif informatique programmable.

4. Système de gestion de batterie (28) d'une batterie comportant une pluralité d'unités de batterie (2-1, 2-2, ..., 2-n), comprenant :

   a) une unité (38) destinée à déterminer une valeur d'état de charge (6) d'au moins une unité de batterie (2-1, 2-2, ..., 2-n) après une phase de repos de la batterie,
   b) une unité (40) destinée à déterminer une valeur de décision permettant de savoir si une valeur d'état de charge (6) antérieure de ladite au moins une unité de batterie (2-1, 2-2, ..., 2-n) peut être actualisée, dans lequel la valeur de décision dépend d'au moins un rapport de la valeur d'état de charge (6) déterminée de ladite au moins une unité de batterie (2-1, 2-2, ..., 2-n) par rapport à la valeur d'état de charge (6) antérieure de ladite au moins une unité de batterie (2-1, 2-2, ..., 2-n) et d'une durée de la phase de repos,
   c) une unité (44) destinée à actualiser la valeur d'état de charge (6) antérieure de ladite au moins une unité de batterie (2-1, 2-2, ..., 2-n) afin d'obtenir une valeur d'état de charge (6) actuelle de ladite au moins une unité de batterie (2-1, 2-2, ..., 2-n) dans le cas où la valeur de décision dépasse une valeur de seuil,
   d) une unité (46) destinée à déterminer une valeur de demande de compensation d'état de charge sur la base de la valeur d'état de charge (6) actuelle, et
   e) une unité (48) destinée à commander la décharge de ladite au moins une unité de batterie (2-1, 2-2, ..., 2-n) sur la base de la valeur de demande de compensation d'état de charge déterminée,

   dans lequel la valeur de décision dépasse la valeur de seuil dans le cas où la valeur d'état de charge (6) déterminée est supérieure à un pourcentage déterminé de la valeur d'état de charge (6) antérieure, dans lequel le pourcentage déterminé de la valeur d'état de charge (6) antérieure est un nombre fixe supérieur ou égal à 100 %.

5. Batterie comprenant la pluralité d'unités de batterie (2-1, 2-2, ..., 2-n) et un système de gestion de batterie (28) selon la revendication 4.

6. Véhicule automobile comportant une batterie selon la revendication 5, dans lequel la batterie est reliée à un système d'entraînement du véhicule automobile.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009002466 A1
- DE 102008002100 A1

- DE 102010043912 A1